# EUROPEAN PATENT APPLICATION

(11) **EP 2 031 590 A1**
(43) Date of publication of application: **04.03.2009**
(21) Application number: 07115367.0
(22) Date of filing: 31.08.2007
(51) Int. Cl.: G11B 20/00

(54) **Method and apparatus for data detection**

(71) Applicant: Deutsche Thomson OHG, 30625 Hannover (DE)
(72) Inventor: Ballweg, Christof, 78050 Villingen-Schwenningen (DE); Kimmelmann, Stefan, 78052 VS-Villingen (DE)
(74) Representative: Thies, Stephan

(57) **Abstract**

In data detection from a storage medium (D) carrying data in a storage layer with a corresponding drive or apparatus (A), a motor (1) moves the medium (D) and a motor control unit (2) controls the position of the medium (D) using a position signal (SP). A reading unit (3) reads the data from the medium (D) and generates a readout signal (D2). By using a sampling control signal, a data detection unit (4) derives discrete data from the readout signal (D2). According to the invention the data detection unit (4) of the apparatus (A) is coupled to the motor control unit (2). In particular, the sampling control signal is derived from the position signal (SP), such that the value of the sampling control signal univocally depends on the position of the motor (1) moving the medium (D).

## Description

### BACKGROUND OF THE INVENTION

### FIELD OF THE INVENTION

The present invention is related to a method for data detection from a storage medium carrying data in a storage layer according to the preamble of claim 1 and to a corresponding apparatus according to the preamble of claim 5.

### DESCRIPTION OF THE PRIOR ART

A method for data detection from a moving storage medium, namely a disk, carrying data in a storage layer, namely in a CD or DVD layer, and a corresponding apparatus, often called drive, referred to as a digital signal reproducing apparatus, is described in US 5,995,465. The apparatus comprises a motor and a motor control unit, referred to as a rotation control means, which controls, i.e. evaluates and influences, a rotation velocity of the disk. The apparatus also comprises a reading unit with a reading means reading the data from the rotated disk and a transferring means for transferring the reading means to a wanted radius position of the disk. In addition, the apparatus comprises a data detecting unit with a clock signal generator for generating a sample clock signal and a decoding means. The data read from the disk as a reading signal is detected by decoding a digital signal from the reading signal on the basis of the sample clock signal.

This apparatus for data detection is used for so-called constant linear velocity CLV disks having a data layer on which information is recorded in accordance with a pre-determined, constant linear velocity CLV. For the detection or readout, the clock signal generating means of the apparatus comprises a frequency setting means and a synchronizing means. The frequency setting means sets a desired frequency of the sample clock signal on the basis of the pre-determined linear velocity of the disk and the radius position of the pickup, and the synchronizing means synchronize the frequency of the sample clock signal with the frequency of the reading signal.

### SUMMARY OF THE INVENTION

It is desirable to develop a method for data detection according to the preamble of claim 1 and a corresponding apparatus according to the preamble of claim 5, which are usable for detecting constant density data from a storage medium which also has a data layer which needs varying velocity access. In particular, detection of CLV-formatted auxiliary data from a holographic storage medium should be possible.

Data detection from a disk having nothing but CLV data operates with a high and substantially constant detecting velocity. Input signal sampling is done at a constant sampling clock rate. Only a small oversampling of data is necessary to cope with residual variations of scanning speed that occur e.g. when the readout means is radially being repositioned, or because of disk excentricity. As a result of the small oversampling, clock regeneration and data buffering need a comparable low amount of storage elements.

By contrast, data detection from a holographic storage medium needs a low and strongly varying detecting velocity. If, for accessing CLV auxiliary data on a holographic storage medium, a method similar to that known for CLV disk access were used, it would entail that the constant sampling clock rate had to be chosen high enough for those instances during the access where a high velocity is being used. Consequently, a big buffer memory size would be needed for sampling clock regeneration and for buffering the data values, parts of which would be extremely oversampled. An improved method and an improved drive are desirable.

According to the invention this is achieved by the features of claim 1 and of claim 5. Possible advantageous developments of the invention are specified in the dependent claims.

In a method according to the invention for data detection from a storage medium carrying data in a storage layer, a motor moves the medium and a motor control unit controls the position of the medium using a position signal. A reading unit extracts a time-continuous readout signal from the medium, and may encompass signal preprocessing. From the readout signal, a data detection unit detects time-discrete data, using a sampling control signal which determines when the readout signal is being sampled and to which memory position the sampled value is being stored. According to the invention, the sampling control signal is being derived from the position signal, such that the value of the sampling control signal univocally depends on the position of the motor moving the medium. As a result, the sampling of the readout signal is coupled to a signal which controls the motor movement, in particular the motor rotation.

The advantage of the invention is that a constant spatial density data structure can efficiently be detected from a storage medium which rotates at a slow and varying speed and which needs a precise access. By this, the amount of necessary oversampling is considerably reduced.

Preferably, a motor is used that allows access at precisely defined positions on the medium, for example a step motor or any other motor that can be driven to rotate clockwise and counter-clockwise. In this way a stiff coupling of the data sampling and the position of the disk is guaranteed.

The data detection coupled to the position of the motor will also work if the disk rotation stops or changes direction. In particular, if the motor has to stop at a certain position, the samples acquired from the readout signal will continue to correspond to geometrically equidistant sampling locations on the disk, even if the rotation is not linear, i.e. if the rotation speed varies.

Preferably, a position address generator generates, from the position signal, an address signal; a motor control signal is generated by a motor waveform generator from the address signal; and the sampling control signal is derived from the same address signal coming from the position address generator.

Preferably, the sampling control signal comprises an enable or sampling clock signal, which triggers sampling the readout signal, and an address information which controls where in a shift register the sampled readout signal is stored. Using all cells of the shift register, a data decoding unit of the data detection unit decodes data from the sampled readout signal.

Preferably, a piezo-electric step motor is used in order to move the medium.

A drive or apparatus according to the invention for data detection from a storage medium carrying data in a storage layer has a motor moving the medium and a motor control unit. The drive has a reading unit reading a readout signal from the medium. The drive also has a data detection unit detecting the discrete data from the readout signal. According to the invention, the data detection unit is coupled to the motor control unit.

Preferably, the motor control unit comprises a position address generator and a motor waveform generator, the data detection unit encompasses a sampling control generator, and the sampling control generator is coupled to the position address generator.

Preferably, the data detection unit comprises a shift register and a data decoding unit coupled to the shift register, and the sampling control generator is coupled to the shift register in order to select data from the discrete data for the shift register.

Preferably, the motor is constituted as a piezo-electric step motor.

### BRIEF DESCRIPTION OF THE DRAWINGS

The invention will subsequently be explained in more detail using one embodiment, illustrated in Figures 1 to 4.
In the Figures:
- Figure 1: shows a simplified block diagram of a part of a drive of an embodiment of the invention;
- Figure 2: shows figure 1 supplemented with a system control unit of the drive;

- Figure 3: shows a simplified block diagram of a data detection unit coupled to a motor control unit of the drive; and
- Figure 4: shows waveforms of a motor control signal and a sampled data signal.

### DETAILED DESCRIPTION OF ONE EMBODIMENT OF THE INVENTION

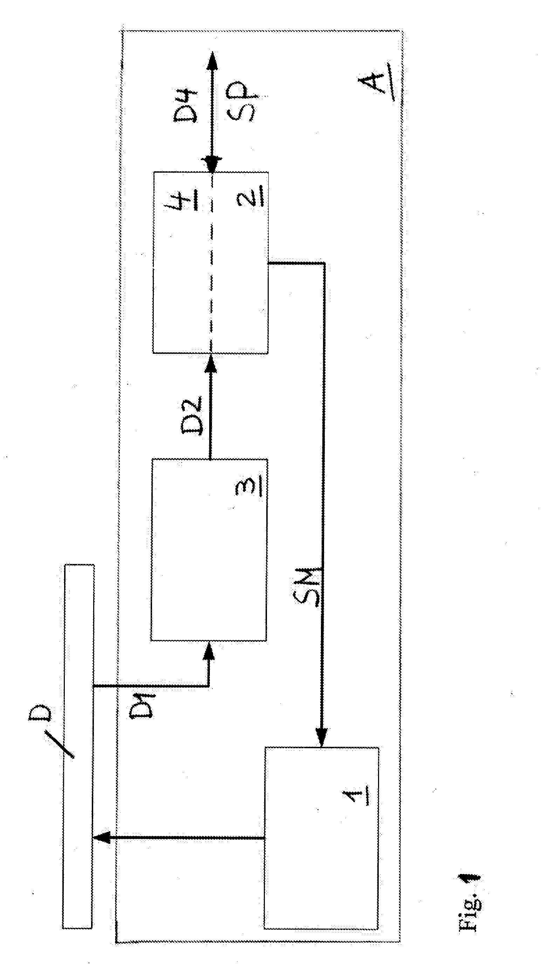

With reference to **Figure 1**, according to the invention a drive or apparatus A for data detection from a storage medium D carrying data in a storage layer is constituted for detecting data from a holographic storage medium D, namely from a disk. The drive A has a motor 1 moving the medium D and a motor control unit 2 with a position address generator not individually shown here. The drive A also has a reading unit 3, which receives a modulated light beam D1 from the medium and provides a time-continuous readout signal D2 to subsequent units. The reading unit 3 comprises, not depicted in the figures, a so-called pickup, which is moved over the medium D while reading the data, and a pickup controller. It may also encompass some signal preprocessing. The drive A also has a data detection unit 4 receiving the readout signal D2 from the reading unit 3. The data detection unit 4 comprises a sampling control generator, not individually depicted here.

According to the invention, the data detection unit 4 is coupled to the motor control unit 2. With other words, an output of the motor control unit 2 is connected to an input of the data detection unit 4. In the Figure, this is symbolised by the dashed line between the units.

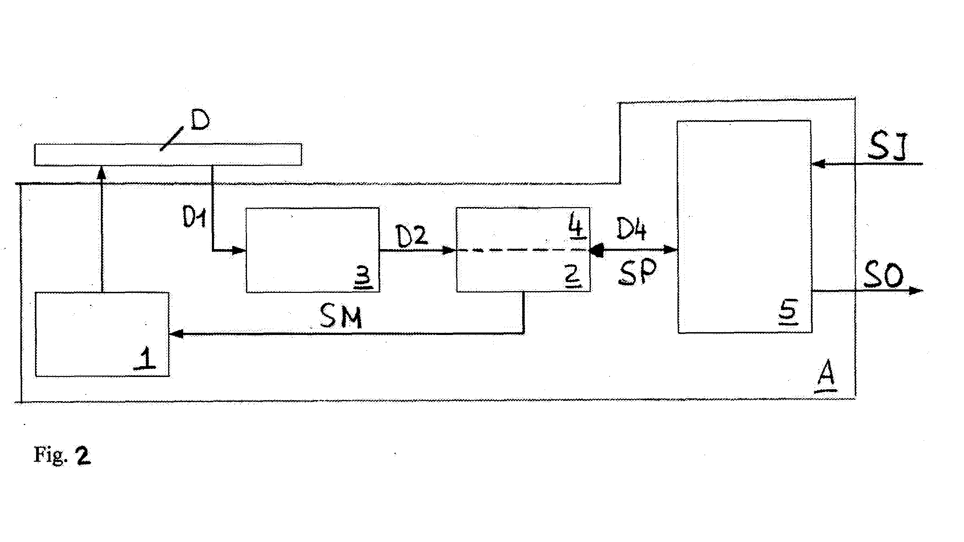

With reference to **Figure 2****,** the combined unit comprising the data detection unit 4 and the motor control unit 2 is connected to a system control unit 5 in a way that information is bi-directionally transmitted. The system control unit 5 has an input for an input signal SI, e.g. for an address signal, and an output for an output signal SO, e.g. for an error signal. The motor 1, which is used for moving the medium D, is constituted as a piezo-electric step motor.

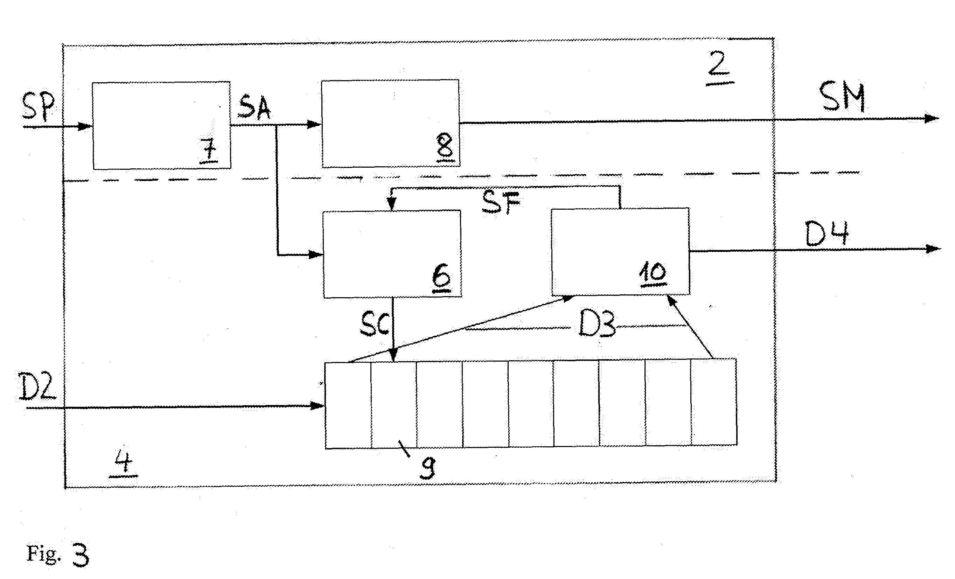

With reference to **Figure 3****,** the motor control unit 2 comprises a position address generator 7 and a motor waveform generator 8. The output of the position address generator 7 is an address signal SA, which goes to an input the motor waveform generator 8, as well as to an input of the sampling control generator 6 of the data detection unit 4. With other words, the sampling control generator 6 of the data detection unit 4 is coupled to the position address generator 7 of the motor control unit 2.

The data detection unit 4 also comprises a shift register 9 and a data decoding unit 10 coupled to the shift register 9. The sampling control generator 6 is coupled to the shift register 9 in order to select, controlled by the sampling control signal SC, discrete data D3 from the readout signal D2 for storing in the shift register 9. The sampling control generator 6 is also connected to the data decoding unit 10 in order to receive therefrom a feedback signal SF. In particular, a detected data D4 is transmitted from the data detection unit 4 to the system control unit 5 and a position signal SP is transmitted from the system control unit 5 to the motor control unit 2.

In a method for data detection from the storage medium D, namely the disk, the motor 1 moves the medium D and the position address generator 7 of the motor control unit 2 controls the position of the medium D, and the reading unit 3 reads the data from the medium D. The data detection unit 4 uses the sampling control signal SC for determining the scanning instances, i.e. for generating the time-discrete data D3 from the readout signal D2.

According to the invention, the sampling control signal SC is derived from an address signal SA, which in turn is generated by the position address generator 7 from the position signal SP. This approach of deriving the sampling clock from the position signal enables, that the value of the sampling control signal SC univocally depends on the position of the motor 1 moving the medium D.

The motor control signal SM is derived by the motor waveform generator 8, which is indirectly controlled by the position signal SP delivered to the position address generator 7. The sampling control signal SC is derived from an address signal SA from the position address generator 7. With other words, the position address generator 7 delivers the address signal SA both to the motor waveform generator 8 and to the sampling control generator 6. Or, with other words, the sampling control signal SC is derived from the same signal, namely the address signal SA, from which also the motor control signal SM is derived.

The sampling control signal SC is provided by the sampling control generator 6 as an enable signal, which samples the readout signal D2 from the medium D into distinct sample values stored somewhere in the shift register 9. Instead of the shift register 9, a random access memory with an address decrement/increment logic can also be used. The decoding unit 10 decodes the discrete data D3 into detected data D4 and sends a feedback signal SF to the sampling control generator 6 where appropriate.

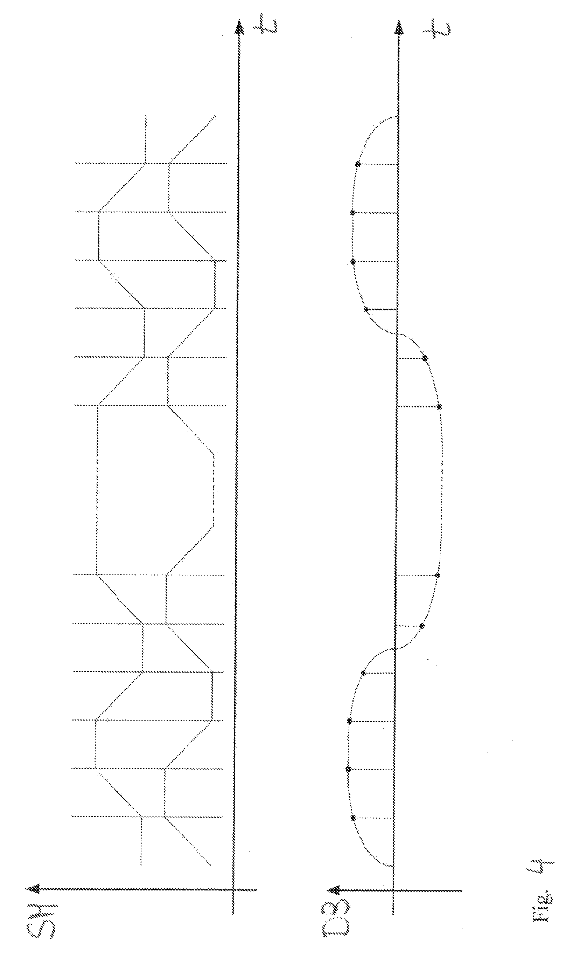

**Figure 4** shows waveforms of the motor control signal SM and a corresponding time-continuous readout signal with superimposed discrete data D3, as a function of time t. From the phase difference of the motor control signals SM shown in the upper half of Fig. 4, it can be deducted that the left half of the diagram corresponds to a disk movement in one direction, whereas the right half corresponds to a disk movement in the opposite direction. In between the two movements, the middle part of the diagrams shows a phase of relative standstill, where the disk movement reverses direction, and correspondingly no samples D3 are being captured from the time-continuous readout signal. With other words, the shown readout signal and sampled values D3 correspond to one pit structure on the disk being scanned and read out first in one direction, the same pit structure subsequently being read backwards in the opposite direction.

With other words, in data detection from a storage medium D carrying data in a storage layer with a corresponding drive or apparatus A, a motor 1 moves the medium D and a motor control unit 2 controls the position of the medium D using a position signal SP. A reading unit 3 reads the data from the medium D and generates a readout signal D2. By using a sampling control signal SC, a data detection unit 4 derives discrete data D3 from the readout signal D2. According to the invention the data detection unit 4 of the apparatus A is coupled to the motor control unit 2. In particular, the sampling control signal SC is derived from the position signal SP, such that the value of the sampling control signal SC univocally depends on the position of the motor 1 moving the medium D.

## Claims

1. A **method** for data detection from a storage medium (D) carrying data in a storage layer, where a motor (1) moves the medium (D) and a motor control unit (2) controls the position of the medium (D) using a position signal (SP), where a reading unit (3) reads a readout signal (D2) from the medium (D), and where, by using a sampling control signal (SC), a data detection unit (4) detects discrete data (D3) from the readout signal (D2), **characterised in that** the sampling control signal (SC) is being derived from the position signal (SP), such that the value of the sampling control signal (SC) univocally depends on the position of the motor (1) moving the medium (D).

2. A method according to claim 1, where, from the position signal (SP), a position address generator (7) generates an address signal (SA), where a motor control signal (SM) is derived by a motor waveform generator (8) from the address signal (SA), and where the sampling control signal (SC) is also derived from the address signal (SA).

3. A method according to claim 1 or 2, where the sampling control signal (SC) is constituted as an enable signal, which samples the readout signal (D2) from the medium (D) as discrete data (D3) into a shift register (9) of the data detection unit (4), and where a decoding unit (10) of the data detection unit (4) decodes the discrete data (D3) into detected data (D4).

4. A method according to one of the previous claims, where a piezo-electric step motor is used as the motor (1) moving the medium (D).

5. An **apparatus** (A) for data detection from a storage medium carrying data (D1) in a storage layer, the apparatus having a motor (1) moving the medium (D) and a motor control unit (2), a reading unit (3) reading a readout signal (D2) from the medium (D), and a data detection unit (4) detecting discrete data (D3) from the readout signal (D2), the apparatus
**characterised in that** the data detection unit (4) is coupled to the motor control unit (2).

6. An apparatus according to claim 5, where the motor control unit (2) encompasses a position address generator (7) and a motor waveform generator (8); where the data detection unit (4) encompasses a sampling control generator (6); and where the sampling control generator (6) is coupled to the position address generator (7).

7. An apparatus according to claim 5 or 6, where the data detection unit (5) comprises a shift register (9) and a data decoding unit (10) coupled to the shift register (9), and where the sampling control generator (6) is coupled to the shift register (9) in order to select data from the discrete data (D3) for the shift register (9).

8. An apparatus according to one of claims 5 to 7, where the motor (1) is constituted as a piezo-electric step motor.
